# EUROPÄISCHE PATENTANMELDUNG

(11) **EP 1 128 171 A1**
(43) Veröffentlichungstag der Anmeldung: **29.08.2001**
(21) Anmeldenummer: 00103730.8
(22) Anmeldetag: 22.02.2000
(51) Int. Cl.: G01L 1/24

(54) **Faseroptischer Belastungssensor zur Detektion von Schienenfahrzeugen**

(71) Anmelder: Sensor Line Gesellschaft für optoelektronische Sensoren mbH, 86529 Schrobenhausen (DE)
(72) Erfinder: Plamper, Jörg, 86529 Schrobenhausen (DE)
(74) Vertreter: Haft, von Puttkamer, Berngruber, Czybulka

(57) **Zusammenfassung**

Die Erfindung betrifft einen zur Erfassung von Schienenfahrzeugen geeigneten ebenen faseroptischen Belastungssensor, der zur Messung der von dem Schienenfahrzeug hervorgerufenen Belastung der Schiene vorteilhaft zwischen ihr und dem Schienenauflager montiert werden kann. Der Sensor enthält mindestens eine Lichtleitfaser, die auf eine Stütz- und Störstruktur geflochten ist, welche aus periodisch angeordneten, harten und quasi-starr miteinander verbundenen Stäben besteht. Diese Lichtleitfaseranordnung ist ihrerseits in einen ElastomerKörper eingegossen, der sich gegen die bei gebräuchlichen Gleisoberbau-Typen eingesetzten Elastomer-Einlagen austauschen läßt. Bei Druckeinwirkung senkrecht zur Ebene des Belastungssensors wird die Lichtleitfaser gegen die Stäbe der Stütz- und Störstruktur gepreßt, wodurch eine Vielzahl von Biegestellen entsteht, an denen Lichtverluste aus der Faser auftreten. Änderungen des einwirkenden Drucks bewirken Änderungen der Biegeradien an den Biegestellen, wodurch sich auch die dort auftretenden Lichtverluste ändern und damit die durch die Lichtleitfaser übertragene Lichtleistung. Letztere wiederum wird als Meßsignal weiterverarbeitet.

## Beschreibung

Gebräuchliche Meßmittel zur Detektion von Schienenfahrzeugen besitzen durchweg ein elektrisches, magnetisches oder elektromagnetisches Funktionsprinzip. Diejenigen unter ihnen, welche auf die Anwesenheit oder die Durchfahrt eines Rads an einer bestimmten Stelle des Schienenstrangs ansprechen, reagieren alle auf die Beeinflussung eines zumeist magnetischen Felds, das statisch oder auch ein Wechselfeld sein kann, durch die ferromagnetische Metallmasse des betreffenden Rads.

Eine ganz ähnliche Aussage läßt sich jedoch über die zu detektierenden Schienenfahrzeuge machen. Auch bei ihnen kommen elektrisch-magnetische Funktionsprinzipien zur Anwendung, sei es in Elektromotoren mit der zugehörigen Leistungselektronik oder auch in Magnetschienenbremsen und Wirbelstrombremsen. Sie beeinflussen Sensoren also nicht nur in der erwünschten Art und Weise sondern stellen selbst überaus ernstzunehmende Störquellen dar. Mit der Einführung immer leistungsstärkerer Züge und Lokomotiven mit neuartigen Antriebs- und Bremssystemen wird die Bereitstellung zuverlässig funktionierender Sensoren zunehmend schwieriger.

Ein weiterer Nachteil gebräuchlicher Radsensoren resultiert aus der Tatsache, daß nicht nur das zu detektierende Rad, sondern auch die Schiene, auf der es sich bewegt, ferromagnetisch ist. Damit das zur Messung benutzte Feld das Rad erreichen kann, müssen solche Sensoren seitlich der Schiene angebracht werden. Dort behindern sie jedoch die Instandhaltung des Gleises, z.B. Stopfarbeiten ganz erheblich. Sie müssen dazu oft entfernt und später wieder angebaut werden, was zusätzlich noch eine erneute Justage mit Abnahme durch den zuständigen Fachingenieur notwendig machen kann.

Die Einführung eines nicht-elektromagnetischen Meßprinzips wäre ein vorteilhafter Ausweg, wobei allerdings zu beachten ist, daß eine elektrische oder magnetische Erfassung von nicht-elektromagnetischen Größen kaum erfolgversprechend sein dürfte. So ist z.B. nicht zu erwarten, daß die Erfassung einer mechanischen Größe mit Hilfe von Dehnmeßstreifen, Piezosensoren, Differentialtransformatoren o.ä. elektromagnetisch weniger störanfällig sein wird als gebräuchliche Meßverfahren.

Optische Meßprinzipien ganz allgemein sind deshalb vorteilhaft, weil die unvermeidlichen Schnittstellen zur nicht-optischen, hier elektrischen Welt vom Meßort entfernt werden können. Meßverfahren, bei denen der Lichtweg durch die Luft führt, besitzen allerdings den Nachteil, daß der Lichtweg leicht aufgrund äußerer Einflüsse unterbrochen werden kann, in erster Linie durch Verschmutzung von Photodetektoren und Lichtquellen. Außerdem ist die Schiene für Licht genauso undurchdringbar wie für elektrische oder magnetische Felder, sodaß auch Sensoren dieser Art seitlich montiert werden müßten.

Faseroptische Verfahren weisen diese Nachteile nicht auf, sofern die Messung wirklich auf faseroptischer Basis stattfindet. Sogenannte faseroptische Reflextaster u.ä. kommen hier also nicht in Betracht. Faseroptische Belastungssensoren, mit denen Kräfte und Verformungen über den s.g. *Microbending-Effekt* gemessen werden können, sind hingegen erfolgversprechend. Bei der Durchfahrt von Schienenfahrzeugen treten mannigfaltige Kräfte und Verformungen des Gleiskörpers auf, und es gilt nur eine zur Anbringung vorteilhafte Stelle ausfindig zu machen und einen Sensor zu ersinnen, der sich zur Beobachtung des mechanischen Geschehens an dieser Stelle eignet.

Ein äußerst vorteilhafter Ort zur Installation eines Sensors befindet sich zwischen Schiene und Schienenauflager, wozu der Sensor natürlich ausreichend flach gestaltet sein muß. Er ist hier vor Umgebungseinflüssen optimal geschützt, kann falls erforderlich so gut wie unsichtbar installiert werden, was Sabotage und Diebstahl zumindest stark erschwert und läßt sich doch bei den meisten Oberbautypen innerhalb weniger Minuten einbauen und wieder entfernen. Die Behinderung von Gleisbaumaßnahmen aller Art wäre schon aus diesem Grund minimal, doch erübrigt sich ein Ausbau in vielen Fällen ohnehin gänzlich. Vorteilhaft ist weiterhin auch, daß sich bei modernen Oberbautypen an dieser Stelle eine Elastomer-Einlage, z.B. eine Zwischenplatte befindet, die sich zum Austausch gegen den Sensor anbietet.

Bei Systemen der Festen Fahrbahn, die auf diskrete Schienenauflagerungen verzichten, z.B. nach dem System INFUNDO, kann ein faseroptischer Belastungssensor ebenfalls im Druckbereich unter der Schiene eingebaut werden, wobei dies lediglich in einer Weise zu geschehen hat, die sicherstellt, daß das Tragelement die Belastung nicht vollständig aufnimmt und damit vom Sensor fernhält.

Die Anforderungen an einen z.B. zwischen Schiene und Schienenauflager zu installierenden Sensor ergeben sich aus den Eigenschaften der zu ersetzenden Elastomer-Einlage und den mechanischen Gegebenheiten am Einbauort. So muß der Sensor der Einlage zunächst einmal geometrisch gleichen; was für seine Auslegung bedeutet daß er u.U. nicht mehr als 5 mm hoch sein darf. Weiterhin muß er die Funktion der Elastomer-Einlage erfüllen können, d.h. er muß die Verbindung zwischen Schiene und Schienenauflager elastisch unter Spannung halten und sollte schwingungsdämpfende Eigenschaften aufweisen. Die mechanischen Randbedingungen ergeben sich aus einer Vorlast von ca 10 kN, bedingt durch die Verbindung der Schiene mit der Schwelle und den zu erwartenden Radlasten, die von weniger als 10 kN bis über 200 kN reichen. In allen Fällen muß die betreffende Radlast sicher detektiert werden können, wobei in keinem Fall eine Zerstörung des Sensors zu befürchten sein darf.

Die hier vorgeschlagene Erfindung löst die durch diese Anforderungen definierte Aufgabe. Sie baut auf der in der Schrift DE 195 34 260 C1 beschriebenen Erfindung eines faseroptischen Belastungssensors auf. Während es sich dabei um einen seilförmigen Sensor mit radialer Druckempfindlichkeit handelt, welcher bereits für recht kleine Kräfte empfindlich ist, muß hier ein planarer Sensor eingesetzt werden, der eine Druckempfindlichkeit senkrecht zu seiner Ebene aufweist, wobei die auf den Sensor einwirkenden Kräfte wesentlich größer sind. Diese unterschiedlichen Forderungen bedingen bei gleichem Meßprinzip wesentliche Unterschiede im Aufbau.

Bei dem Sensor aus DE 195 34 260 C1 verläuft eine Lichtleitfaser auf einer tragenden Stützstruktur, von der er durch eine aus periodischen Erhöhungen bestehende Störstruktur in regelmäßigen Abständen abgehoben wird. Eine Vorspannung, die durch eine elastische Umhüllung des letztendlich seilförmigen Sensor erzeugt wird, führt zu einer Streckenlast auf den Lichtleiter in Richtung auf die Stützstruktur zu, wodurch an den Kreuzungspunkten mit der Störstruktur Biegestellen mit kleinen Biegeradien entstehen, die zu Verlusten führen, wenn durch die Faser Licht geleitet wird. Die zu erfassende Belastung addiert sich zu dieser Vorspannung, verkleinert die Biegeradien weiter und vergrößert die Lichtverluste, was den eigentlichen Meßeffekt darstellt. Zur Messung wird an einem Ende der Faser mit Hilfe eines geeigneten optischen Senders Licht eingespeist, und am anderen Ende mit einem Photodetektor die ankommende Leistung gemessen, die sich bei Belastung signifikant verringert.

Würde eine solche Anordnung mit dem Druck beaufschlagt, der durch die Belastung der Berührungsfläche zwischen einer Eisenbahnschiene und einer Schwelle mit der Radlast eines Schienenfahrzeugs entsteht, so würde die Lichtleitfaser sicherlich zerstört. Weiterhin kann bei einem planaren Sensor die Vorspannung des Lichtleiters nicht wie bei einem seilförmigen durch eine elastische Umhüllung erzeugt werden. Der Sensor ist zwar im eingebauten Zustand grundsätzlich vorgespannt, doch muß auch vor der Montage und sogar bei der Herstellung schon sichergestellt sein, daß die Lichtleitfaser immer Kontakt zur Störstruktur hat.

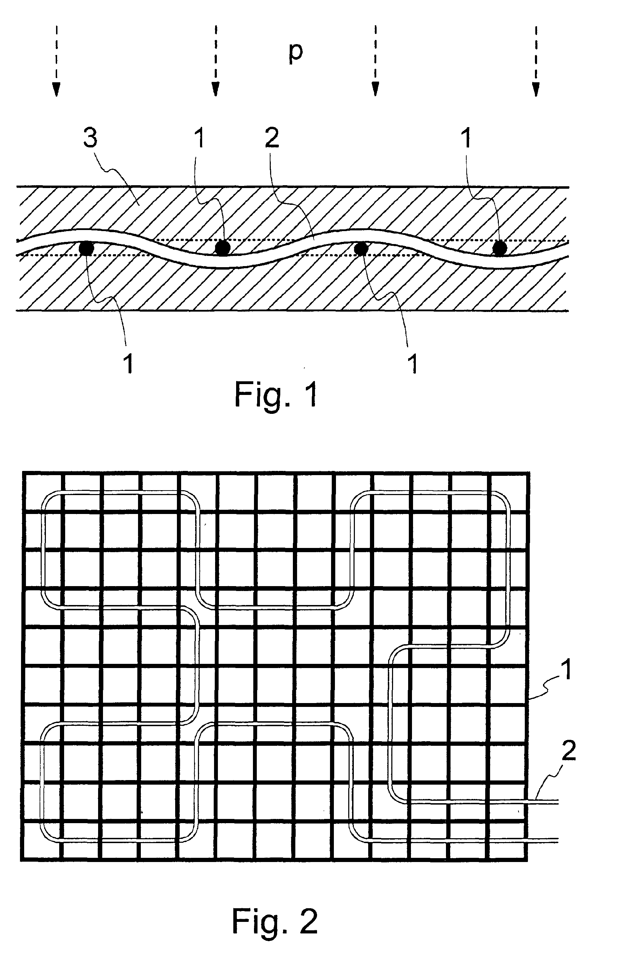

Dem trägt der in Fig. 1 im Querschnitt dargestellte sehr einfache Aufbau Rechnung. Eine Störstruktur 1 besteht aus periodisch angeordneten harten Stäben, die quasi starr miteinander verbunden sind (punktiert angedeutet), sodaß ihre Position zueinander fixiert ist. Die Lichtleitfaser 2 ist in der gezeichneten Weise zwischen den Stäben hindurchgeführt, wobei deren Abstand so bemessen ist, daß in der Faser eine Biegespannung entsteht, die sie gegen die Stäbe drückt und in der weiteren Folge ihre Lage durch Reibungskräfte fixiert. Das Ganze ist in einen Elastomerkörper 3 eingegossen, dessen äußere Form bei diskreten Schienenauflagern der zu ersetzenden Elastomer-Einlage entspricht, der bei Oberbausystemen, bei denen die Schienen in einen Elastomer eingegossen sind, aber auch mit ebendiesem Elastomer-Verguß identisch sein kann. Der Begriff "eingegossen" muß dabei selbstverständlich so verstanden werden, daß sich hier auch Fertigungstechniken anwenden lassen, die fachlich genauer mit Ausdrücken wie "Spritzgießen", "Umspritzen" o.ä. charakterisiert werden können, allgemein Fertigungstechniken, die zu einer vollständig formschlüssigen Einbettung führen.

Der wesentliche systematische Unterschied zu dem Belastungssensor aus DE 195 34 260 C1 besteht darin, daß letzterer Leerräume zwischen Lichtleitfaser und Stützstruktur aufweist, in die hinein sich die Faser schon bei kleiner Belastung verformen kann. Solche Leerräume sind hier nicht vorhanden, sodaß sowohl der Meßeffekt als auch eine Zerstörungsgefahr wie gefordert erst bei wesentlich größeren Kräften auftritt. Der alternierende Verlauf der Lichtleitfaser unter Biegespannung stellt sicher, daß sie auch ohne den Elastomerverguß an allen Kreuzungspunkten mit der Störstruktur immer mit ihr in Kontakt bleibt. Wäre dies nicht der Fall, so könnte beim Vergießen u.U. flüssiger Elastomer zwischen Faser und Störstruktur eindringen und dort eine trennende Schicht bilden. Das aber würde den Meßeffekt wirksam unterbinden, da eine frei durch den Elastomer geführte Lichtleitfaser nahezu völlig druckunempfindlich ist.

Fig. 2 zeigt eine vorteilhafte Ausgestaltung von Störstruktur 1 und Lichtleitfaser 2. Die quasi starre Verbindung zwischen den Stäben besteht hier ihrerseits aus gleichartigen, ebenfalls parallel angeordneten Stäben, sodaß sich ein Gitter ergibt, auf das der Lichtleiter z.B. in der gezeichneten Weise mäanderförmig aufgeflochten ist. Der mäandrierende Verlauf hat zwei Vorteile: Erstens ergeben sich dadurch mehr Überkreuzungen mit der Störstruktur, was den Meßeffekt vergrößert, ohne die Zerstörungsgefahr zu erhöhen. Zweitens wird so das Verhältnis zwischen der Länge des Lichtleiters und der von ihm eingeschlossenen Fläche vergrößert. Wird der Sensor belastet, so wird das Material bestrebt sein, der Belastung seitlich auszuweichen, m.a.W. die vom Lichtleiter eingeschlossene Fläche zu vergrößern und ihn damit unter unerwünschte Zugspannung zu setzen. Je mehr Möglichkeiten der Lichtleiter hat, sich "geradezuziehen" anstatt in Richtung seiner Achse zu dehnen, desto geringer wird diese Zugspannung ausfallen.

Als Lichtleitfaser eignet sich z.B. eine sogenannte PCS- oder HCS-Faser (*plastic clad silica* bzw. *hard clad silica)* mit einem Quarzglas-Kern von 200 *µ*m Durchmesser, einem polymeren optischen Mantel (Cladding) von 230 µm Durchmesser und einer Kunststoffumhüllung (Buffer) von 500 µm Durchmesser. In diesem Fall kann für den Durchmesser der Stäbe ebenfalls 500 µm gewählt werden.

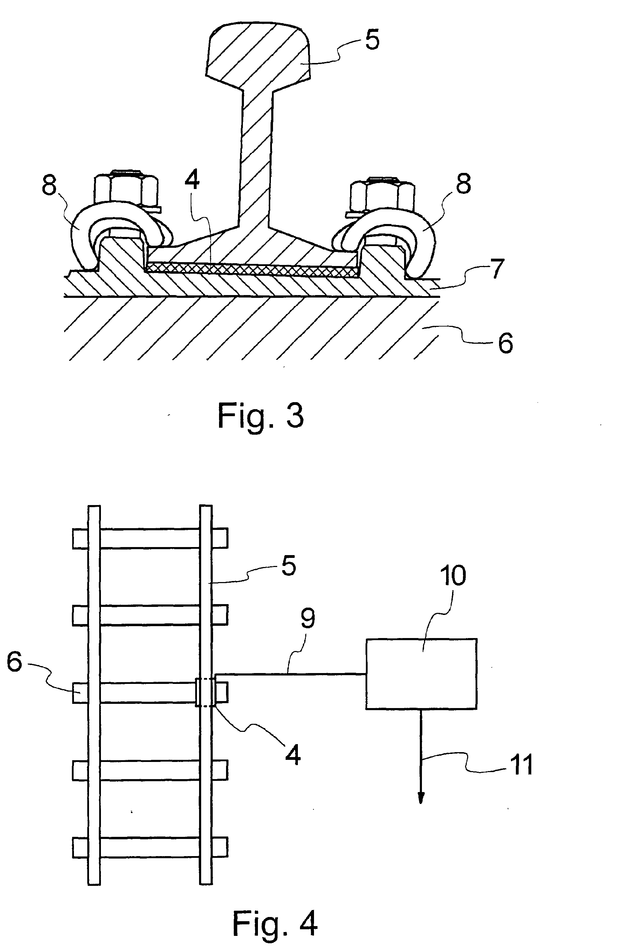

Fig. 3 zeigt beispielhaft die Montage eines Sensors 4 zwischen Schiene 5 und Schwelle 6. Als Detail ist zu beachten, daß hierbei eine Rippenplatte 7 zur seitlichen Führung der Schiene Anwendung findet. Der Sensor wird vorteilhaft genau wie die zu ersetzende Elastomer-Platte zwischen Rippenplatte und Schiene montiert, weil nämlich hier z.B. durch die elastischen Spannklemmen 8 eine Vorspannung des Sensors sichergestellt ist. Diese Vorspannung ist vorteilhaft, weil bei allen faseroptischen Belastungssensoren der beschriebenen Art die Kennlinie des Meßeffekts über der Belastung in der Nähe des Nullpunkts zunächst flacher verläuft als bei größeren Belastungen. Man erhält darum eine größere Empfindlichkeit für kleine Lasten, wenn diese zu einer Vorlast addiert werden, deren eigener Meßeffekt als Nullpunkt subtrahiert wird. Vor allem aber muß sichergestellt werden, daß niemals ein Luftspalt zwischen Schiene und Sensor oder Sensor und Schienenauflager entstehen kann. In einen solchen könnten nicht nur Fremdkörper eindringen, es wäre auch möglich, daß der Spalt bei sehr leichten Fahrzeugen aufgrund der Steifheit der Schiene gar nicht geschlossen wird, sodaß sich die Belastung des Sensors überhaupt nicht ändert. Eine ausreichende Vorspannung verhindert so etwas zuverlässig.

Wird abweichend von dem in Fig. 3 dargestellten Beispiel eine Lichtleiteranordnung nach Fig. 2 zusammen mit der Schiene in Elastomer eingegossen, so ist es nicht möglich, eine Vorspannung zu erzeugen. Der flachere Verlauf der Sensorkennlinie in der Nähe des Nullpunkts muß hier in Kauf genommen werden. Da aber sowohl die Schiene als auch die Lichtleiteranordnung von dem Verguß dicht umschlossen werden, kann hier unter keinen Umständen ein Luftspalt entstehen, sodaß das Fehlen einer Vorspannung hier akzeptabel ist.

Fig. 4 zeigt das Schema einer vorteilhaften Sensor-Gesamtinstallation. Der zwischen Schiene 5 und Schwelle 6 installierte Sensor 4 ist über ein doppeltes Lichtleiterkabel 9 zunächst mit einem neben dem Gleis installierten Schaltkasten 10 verbunden. Das ist sinnvoll, da die Enden der Lichtleitfaser 2, die zur Messung dient, ohne weiteres einige Meter lang sein und nach Aufbringen einer schützenden Umhüllung die Verbindung zum Schaltkasten herstellen können, ohne daß eigens Lichtleiter an den Sensor angeschlossen werden müssen. Zur Herstellung einer Lichtleiterverbindung über einige hundert Meter oder gar einige Kilometer sind hingegen fertige Lichtleiterkabel, bei denen nur die Enden "abisoliert" und mit Steckern versehen werden, weitaus besser geeignet. Die Verbindung 11 zur übergeordneten Schalteinheit (Stellwerk, Bahnübergang etc) kann mit einem solchen Lichtleiterkabel hergestellt werden; in diesem Fall braucht der Schaltkasten nur Lichtleiterverbinder zu enthalten, und nicht nur der Sensor sondern auch die Signalverbindung ist elektromagnetisch unempfindlich. Es ist aber auch möglich, in dem Schaltkasten eine opto-elektronische Einrichtung zur Signalverarbeitung zu installieren, und die Verbindung 11 ganz oder teilweise (Stromversorgung) elektrisch auszuführen. In diesem Fall beginnt der elektrische Teil des Systems immerhin erst einige Meter von der Schiene entfernt, was viele Probleme elektromagnetischer Art bereits lösen dürfte.

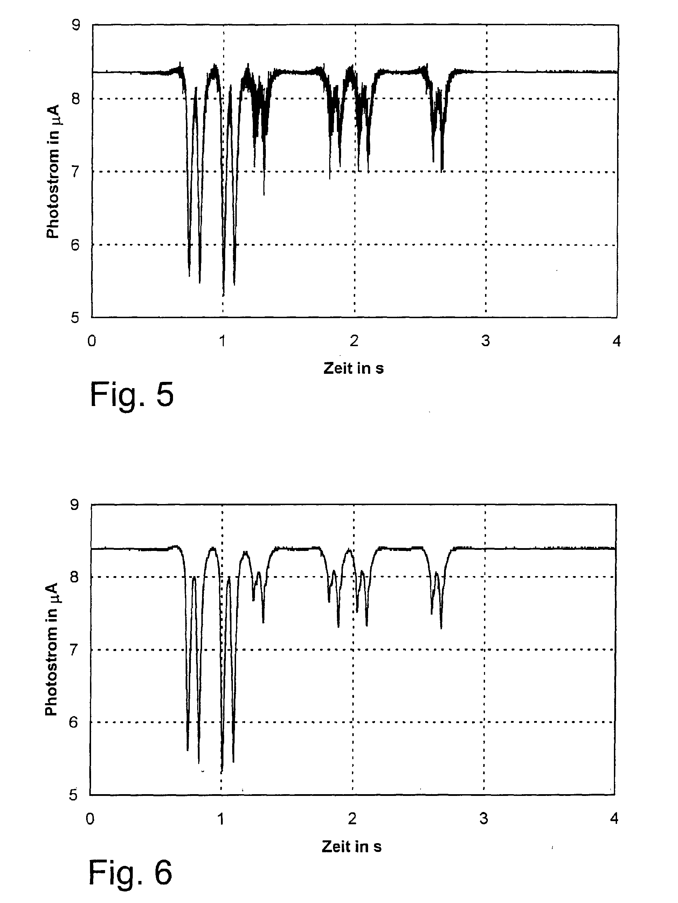

Fig. 5 zeigt beispielhaft ein Signal, das man mit einer solchen Anordnung bei Überfahrt eines Zuges erhält. Über der Zeit aufgetragen ist hier der Strom, der in dem Photodetektor am Ende der Lichtleitfaser erzeugt wird. Er ist der übertragenen Lichtleistung proportional und stellt für eine nachgeschaltete Signalverarbeitung die eigentliche Eingangsgröße dar. Bei dem hier registrierten Fahrzeug handelt es sich um einen Wendezug bestehend aus einer Diesellok BR 218 an der Spitze, einem Bn-Nahverkehrswagen (Silberling) und einem Steuerwagen am Ende. Man erkennt, daß mit dem beschriebenen Aufbau die Überfahrt jeder einzelne Achse detektierbar ist. Ebenso erkennbar ist das wesentlich höhere Gewicht der Lok.

Aus Fig. 5 geht ebenfalls hervor, daß das Signal, das dem durch das Gewicht des Fahrzeugs hervorgerufenen Lastverlauf entspricht, mit einem höherfrequenten Signal überlagert ist, dessen Amplitude bei der Überfahrt eines Rades ein Maximum durchläuft. Es handelt sich hierbei um Schwingungen der Schiene, die von dem Sensor ebenfalls registriert werden. Ihre Frequenz liegt bei etwa 2 kHz, dieser Wert liegt weit über den Frequenzen, aus denen das interessierende Lastsignal zusammengesetzt ist. Mit einem einfachen Tiefpaß 1. Ordnung können diese hohen Frequenzen wirksam unterdrückt werden, ohne das Nutzsignal merklich zu verformen. Die Wirkung eines solchen Tiefpaßfilters zeigt Fig. 6. Der bei der Überfahrt eines Rades auftretende Signalverlauf ist so charakteristisch, daß er sich schwerlich mit einer elektronischen Störung verwechseln läßt, die etwa in den elektrischen Teil des Systems eingestreut werden könnte. Der Entwurf einer Signalverarbeitung für eine Raderkennung mit hoher Zuverlässigkeit stellt somit kein größeres Problem dar.

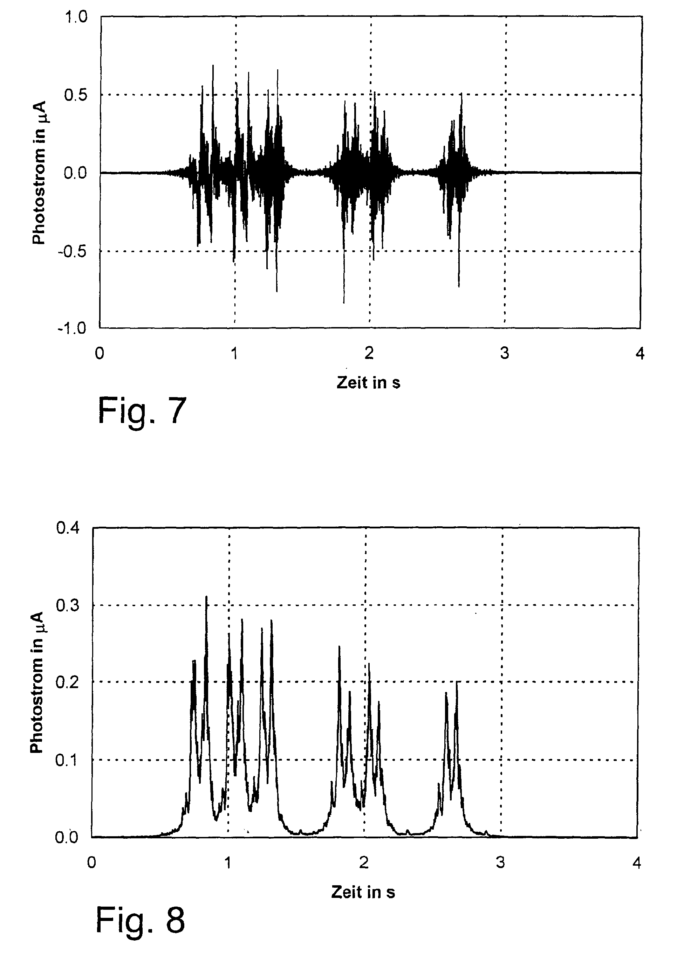

Auch aus dem in Fig. 6 unterdrückten höherfrequenten Signalanteil, der in Fig. 7 dargestellt ist, lassen sich Informationen gewinnen. Fig. 8 zeigt den Effekt einer Amplituden-Demodulation dieses Signalanteils, d.h. einer Gleichrichtung mit anschließender Anwendung eines weiteren Tiefpaßfilters. Dieses Signal ist weniger gut zur Raderkennung geeignet, da es hauptsächlich die Lautstärke von Fahrgeräuschen wiedergibt, und diese werden nicht nur vom Fahrzeug, sondern auch vom Gleis verursacht. So sind z.B. in Fig. 8 kurz vor der Überfahrt eines jeden Drehgestells, und ein etwas größeres Stück danach systematische Maxima zu erkennen, die keiner Lasterhöhung zugeschrieben werden können, sondern durch Geräusche hervorgerufen werden, die beim Überfahren von "geräuschintensiven" Stellen der Schiene entstehen. In gleicher Weise werden aber auch s.g. Flachstellen an Rädern quasi hörbar, die sich durch Vergleich des demodulierten Signals mit dem Lastsignal einfach detektieren lassen.

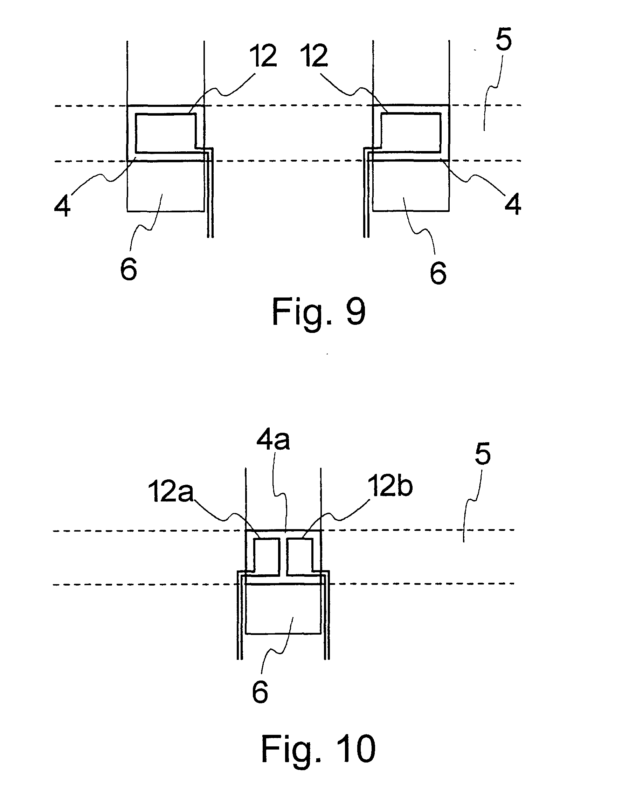

Zur Realisierung von Achszählern ist es erforderlich, die Richtung zu erkennen, in der eine Überfahrt erfolgt. Achszähler werden zur Ermittlung des Besetzt-Zustands von Gleisabschnitten eingesetzt, und es muß sich feststellen lassen, ob die gezählten Achsen in den betreffenden Abschnitt hinein oder aus ihm herausgefahren sind. Das hier beschriebene Sensorprinzip erlaubt eine solche Richtungserkennung auf mehrere Arten. Eine eher triviale Möglichkeit zeigt Fig. 9: Hier sind auf zwei benachbarten Schwellen 6 zwei gleichartige Sensoren 4 der beschriebenen Bauart unter der Schiene 5 installiert. Beide enthalten einen Lichtleiteraufbau 12 gemäß Fig. 2. Es ist nicht unbedingt erforderlich, die Sensoren wie gezeichnet achsensymmetrisch aufzubauen, doch kann man durchaus daran denken, z.B. von vornherein Doppelsensoren mit einer gemeinsamen Lichtleiter-Zuleitung zu realisieren, um die Kabelverlegung zu vereinfachen. Bei der Überfahrt eines Rades liefern die beiden Sensoren Signalverläufen wie in Fig. 5 bis 8 dargestellt, die zeitlich gegeneinander versetzt sind. Aus der Richtung dieser zeitlichen Versetzung kann die Richtung der Überfahrt bestimmt werden, und ihr Ausmaß liefert die gefahrene Geschwindigkeit. Versuche haben ergeben, daß sich die beiden Signalverläufe auch dann noch einwandfrei unterscheiden lassen, wenn der Abstand der beiden Sensoren nur einen einzigen Schwellenabstand beträgt.

Eine weitere Möglichkeit zur Richtungserkennung zeigt Fig. 10. Hier befindet sich auf der Schwelle 6 nur ein einzelner Sensor 4a, dessen Aufbau sich von dem bis hierher beschriebenen dahingehend unterscheidet, daß er zwei Lichtleiteranordnungen 12a und 12b anstelle einer einzelnen enthält, die in Fahrtrichtung gegeneinander versetzt sind. Die Lichtleiterzuleitungen wird man in der Praxis natürlich in Form eines gemeinsamen Kabels ausführen; sie sind in Fig. 10 nur aus Gründen der Übersichtlichkeit getrennt eingezeichnet. Ebenso können die beiden Lichtleitfasern ohne weiteres auf eine gemeinsame Störstruktur aufgeflochten sein, deren Beschaffenheit sich von jener der bisher beschriebenen nicht zu unterscheiden braucht.

Es ist nicht ohne weiteres ersichtlich, daß diese beiden Lichtleiteranordnungen bei einer Überfahrt unterschiedliche Signale liefern, doch ist dies in der Tat der Fall. Nähert sich nämlich ein Rad von einer bestimmten Seite dem Sensor, so biegt es die Schiene dabei durch. Der Sensor wird dadurch unsymmetrisch belastet, und zwar ergibt sich auf der dem Rad zugewandten Seite der Schwelle eine erhöhte Belastung, während auf der dem Rad abgewandten Seite wegen der Steifigkeit der Schiene sogar eine Entlastung auftritt. Im Augenblick der Überfahrt ist die Belastung des Sensors symmetrisch, und wenn sich das Rad auf der anderen Seite der Schwelle entfernt, wiederholt sich die Unsymmetrie der Belastung mit umgekehrtem Vorzeichen. Befindet sich also ein Rad nicht genau auf dem Sensor, so kann mit dessen Hilfe festgestellt werden, ob es sich links oder rechts von ihm befindet, und mit dieser Kenntnis läßt sich die Richtung einer Überfahrt natürlich leicht feststellen.

Faseroptische Belastungssensoren der hier beschriebenen Art eignen sich nicht nur zur Detektion von Schienenfahrzeugen. Sie können z.B. auch zur Messung von Vibrationen an Maschinen aller Art Einsatz finden, wobei sich mit Hilfe von Anordnungen ähnlich der im obigen Absatz beschriebenen auch Drehschwingungen erfassen lassen. Sie sind allgemein zur Erfassung von Kräften geeignet, die zwischen unter Spannung oder zumindest formschlüssig verbundenen Teilen wirken, wodurch sich ein breites Anwendungsspektrum ergibt.

## Patentansprüche

1. Mit mindestens einer ein Lichteintritts- und ein Lichtaustrittsende aufweisenden Lichtleitfaseranordnung ausgestatteter ebener faseroptischer Belastungssensor, bei dem die Belastung auf die Lichtleitfaseranordnung einwirkt und über vom Lichteintrittsende zum Lichtaustrittsende übertragenes Licht aufgrund von Biegeradiusänderungen der die Lichtleitfaseranordnung bildenden Lichtleitfaser (2) erfaßt ist, die Lichtleitfaseranordnung mindestens eine Lichtleitfaser aufweist, die auf eine aus periodisch angeordneten harten Stäben bestehende steife Stütz- und Störstruktur (1) geflochten ist, das Lichteintritts- und das Lichtaustrittsende gemeinsam außerhalb der Stütz- und Störstruktur angeordnet sind, die Biegeradiusänderungen durch die Stütz- und Störstruktur hervorgerufen sind und die Lichtleitfaser und die Stütz- und Störstruktur in einen aus einem Elastomer bestehenden Körper (3) eingegossen sind.

2. Belastungssensor nach Anspruch 1, bestehend aus einer Vielzahl parallel zueinander in derselben Ebene angeordneter harter zylindrischer Stäbe, deren Durchmesser im wesentlichen dem Durchmesser der Lichtleitfaser entspricht und aus mindestens einer Lichtleitfaser, die im wesentlichen senkrecht zu den Längsachsen der Stäbe wellenförmig derart angeordnet ist, daß die Wellenberge über den Stäben und die Wellentäler unter den Stäben liegen, wobei die Wellenberge sowie die Wellentäler an den Stäben anliegen und wobei die Stäbe und die Lichtleitfaser allseitig von einem Elastomer umgeben sind.

3. Belastungssensor nach Anspruch 1, bestehend aus einer Vielzahl ein im wesentlichen rechteckiges Gitter bildender harter zylindrischer Stäbe, deren Durchmesser im wesentlichen dem Durchmesser der Lichtleitfaser entspricht und aus mindestens einer Lichtleitfaser, die wellenförmig derart angeordnet ist, daß die Wellenberge über den Stäben und die Wellentäler unter den Stäben des Gitters liegen, wobei Wellenberge sowie Wellentäler an den Stäben anliegen, an den Kreuzungsstellen mit den Gitterstäben die Lichtleitfaser im wesentlichen senkrecht zu den Längsachsen der Gitterstäbe angeordnet ist, wobei die Lichtleitfaser in den Bereichen zwischen den Gitterstäben mehrfach ihre Richtung ändert und dadurch einen mäanderförmigen Verlauf aufweist und wobei die Stäbe und die Lichtleitfaser allseitig von einem Elastomer umgeben sind.

4. Vorrichtung zur Messung von Anpreßkräften zwischen zwei Körpern mit reibschlüssiger Verbindung, bei der mindestens ein faseroptischer Belastungssensor nach einem der Ansprüche 1 bis 3 zwischen die beiden Körper eingebracht ist und die zu erfassenden Anpreßkräfte überträgt.

5. Vorrichtung zur Messung von Kräften, die zwischen einem in einen Elastomer eingegossenen Körper und dem Elastomer selbst wirken, bei der mindestens ein faseroptischer Belastungssensor nach einem der Ansprüche 1 bis 3 dadurch hergestellt wird, daß zusammen mit dem besagten Körper auch mindestens eine aus Stütz- und Störstruktur (1) und Lichtleitfaser (2) bestehende Lichtleitfaseranordnung eingegossen wird.

6. Vorrichtung zur Erfassung von Schienenfahrzeugen auf einem Gleisoberbau mit diskreten Schienenauflagern, bei der mindestens eine Vorrichtung nach Anspruch 4 als elastische Einlage zwischen Schiene und Schienenauflager eingebracht ist.

7. Vorrichtung zur Erfassung von Schienenfahrzeugen auf einem Gleisoberbau ohne diskrete Schienenauflager, bei der mindestens eine Vorrichtung nach Anspruch 4 so unter der Schiene montiert ist, daß sie zumindest einen Teil der zwischen Schiene und Unterlage wirkenden Druckkräfte überträgt.

8. Vorrichtung zur Erfassung von Schienenfahrzeugen auf einem Gleisoberbau mit in einem Elastomer eingegossenen Schienen, bei der eine Vorrichtung nach Anspruch 5 dadurch hergestellt wird, daß unterhalb der Schiene mindestens eine aus Stütz- und Störstruktur (1) und Lichtleitfaser (2) bestehende Lichtleitfaseranordnung eingegossen wird.
